# FASCICULE DE BREVET EUROPEEN

(11) **EP 3 277 532 B1**
(45) Date de publication et mention de la délivrance du brevet: **07.05.2025**
(21) Numéro de dépôt: 16715004.4
(22) Date de dépôt: 04.03.2016
(51) Int. Cl.: B60K 1/02, B60K 6/36, B60K 6/44, B60K 6/547

(54) **GROUPE MOTOPROPULSEUR HYBRIDE COMPORTANT DEUX MOTEURS ELECTRIQUES ET UN MOTEUR THERMIQUE**
HYBRIDANTRIEB MIT ZWEI ELEKTROMOTOREN UND EINER WÄRMEKRAFTMASCHINE
HYBRID POWERTRAIN COMPRISING TWO ELECTRIC MOTORS AND ONE HEAT ENGINE

(30) Priorité: 31.03.2015 FR 1552710
(43) Date de publication de la demande: 07.02.2018
(73) Titulaire: NEW H POWERTRAIN HOLDING, S.L.U., 47008 Valladolid (ES)
(72) Inventeur: EJARQUE, Pascal, 78370 Plaisir (FR); LASSEUR, Bertrand, 92370 Chaville (FR)
(74) Mandataire: Renault Group
(86) Numéro de dépôt international: PCT/FR2016/050514
(87) Numéro de publication internationale: WO 2016/156689

(56) Documents cités:
- WO-A1-02/47931
- WO-A1-2014/115881
- FR-A1- 3 007 696

## Description

La présente invention se rapporte aux architectures de traction hybride, notamment pour véhicule routier.

Elle concerne en particulier un groupe motopropulseur (GMP) hybride, comportant deux machines électriques et un moteur thermique.

Plus précisément, l'invention a pour objet un groupe motopropulseur hybride de tel que défini par la revendication 1.

La présente invention a aussi pour objet le procédé de commande d'un tel groupe motopropulseur tel que défini par la revendication 12.

Elle porte également sur une boîte de vitesses à arbres parallèles et à engrenages pour véhicule tel que définie par la revendication 8.

Il existe aujourd'hui dans le domaine automobile un besoin pour des GMP puissants, qui émettent peu de gaz carbonique, et qui permettent de réaliser des déplacements sur des distances importantes.

Par la publication US 8 622 861, on connaît un GMP hybride pour véhicule muni d'un moteur thermique et de deux machines électriquesmontées autour d'un train épicycloïdal. L'une des machines électriques est montée en moteur principal, et l'autre en génératrice. Ce GMP dispose de deux rapports à passage sous couple, pour la machine électrique et le moteur thermique. Toutefois, dans ce GMP, les trois moteurs sont alignés, et les arbres d'entrée de mouvement dans le mécanisme de changement de vitesses le sont également. En raison de cet alignement et du nombre limité d'entrées de mouvement dans le train épicycloïdal, ses possibilités d'utilisation sont limitées. En particulier, la machine électrique de traction ne peut pas être déconnectée à haute vitesse.

La publication FR3007696A1 divulgue une boite de vitesse comprenant trois arbres d'entrée dont deux arbres concentriques, en raison de cet alignement d'au moins deux sources motrices, les possibilités d'utilisation sont limitées.

La présente invention vise à réaliser une chaîne de traction multimodes, permettant l'utilisation simultanée, ou découplée, de trois sources motrices, pour disposer de nombreux modes de fonctionnement, électriques, thermiques ou hybrides.

Dans ce but, un des coupleurs de la boîte permet d'établir deux rapports de transmission différents entre l'un des arbres d'entrée et l'arbre de sortie commun.

Dans un mode de réalisation préféré de l'invention, les trois sources motrices sont respectivement une machine électrique principale, une machine électrique secondaire et un moteur thermique.

Dans la boîte de vitesses, le couple de la machine électrique principale est renvoyé sur l'arbre de sortie commun par l'intermédiaire d'un pignon double, tournant librement sur l'arbre d'entrée de la machine électrique secondaire.

La fermeture d'un coupleur assure le déplacement du véhicule en mode électrique avec une machine électrique, sur l'un ou l'autre de deux rapports électriques.

La fermeture simultanée de deux des trois coupleurs, assure le déplacement du véhicule en mode électrique avec une première machine électrique sur l'un ou l'autre de deux rapports électriques.

La fermeture simultanée des trois coupleurs, assure le déplacement du véhicule en mode hybride, avec la puissance cumulée des deux machines électriques et du moteur thermique.

La fermeture simultanée de deux des trois coupleurs permet également de déplacer le véhicule en mode électrique, avec une machine électrique, tout en utilisant le moteur thermique pour faire tourner une autre machine électrique en générateur.

Le véhicule peut se déplacer en mode électrique, en fermant seulement un coupleur.

La marche arrière peut être assurée par une seule machine électrique, ou par les deux, en fermant seulement l'un des coupleurs.

Le mode thermique est obtenu en fermant seulement l'un des coupleurs.

Selon une disposition interne de la boîte de vitesses, le couple de la machine électrique principale est renvoyé sur l'arbre de sortie commun par l'intermédiaire d'un pignon double, tournant librement sur l'arbre d'entrée de la machine électrique secondaire.

Ces mesures assurent à la fois une puissance globale importante par l'utilisation simultanée des trois moteurs, ainsi que de nombreuses configurations de fonctionnement, telles que la recharge des batteries en roulage, un mode « *refuge* », avec uniquement le moteur thermique, un mode hybride « *boost »* ou la puissance du moteur thermique se cumule à celle des deux machines électriques et, un mode « économique », avec seulement la machine électrique la moins puissante.

La présente invention sera mieux comprise à la lecture de la description suivante d'un mode de réalisation non limitatif de celle-ci, en se reportant aux dessins annexés, sur lesquels :

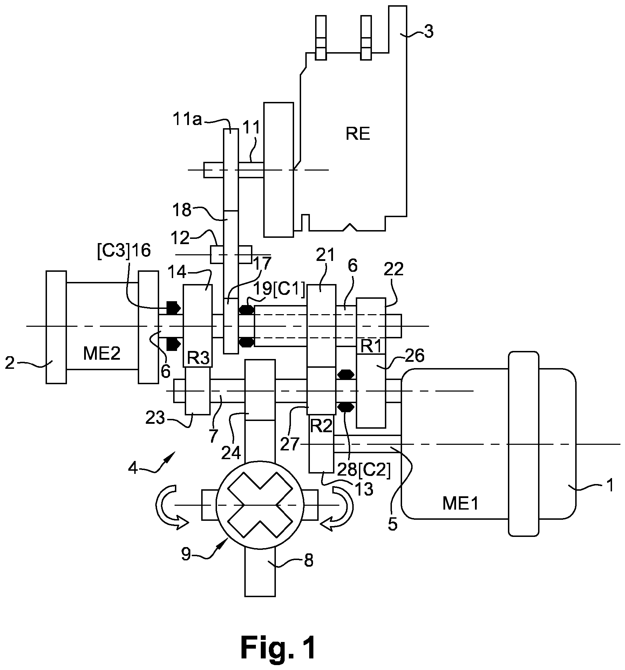

- la figure 1 est un schéma d'architecture du GMP proposé,
- sur la figure 2A, ce GMP est en mode électrique, avec la machine électrique principale seule, sur un premier rapport R1,
- sur la figure 2B, il est en mode électrique, avec la machine électrique principale seule, sur un deuxième rapport R2,
- sur la figure 2C, il est en mode électrique sur le rapport R1, avec les deux machines électriques,
- sur la figure 2D, il est en mode électrique sur le rapport R2 avec les deux machines électriques,
- sur les figure 2E, 2F, 2G il est en mode électrique *« range extender* », respectivement en roulant sur le rapport R1 (figure 2E), en roulant sur le rapport R2 (figure 2F), et à l'arrêt (figure 2G),
- sur la figure 2H, il est en mode hybride « boost », sur un troisième rapport R3, avec les trois sources motrices fonctionnant simultanément,
- sur la figure 2I, il est en mode thermique avec un apport de puissance possible par la machine électrique principale.
- sur la figure 2J, il est en mode électrique « économique » sur le rapport R3,
- sur la figure 2K, il est en marche arrière avec la machine électrique secondaire, et
- sur la figure 2L, il est en marche arrière avec les deux machines électriques.

Le GMP représenté schématiquement sur les figures, est composé de trois sources motrices 1, 2, 3 reliées à une même boîte de vitesses 4 à arbres parallèles munie de trois coupleurs 19, 28, 16 permettant d'établir sélectivement dans celle-ci la transmission du couple fourni par une ou plusieurs des trois sources motrices vers les roues du véhicule sur différents rapports de transmission. Dans le mode de réalisation non limitatif de l'invention, illustré par les figures, les trois sources motrices sont respectivement une machine électrique principale 1, une machine électrique secondaire 2 et un moteur thermique 3. Leurs couples se réunissent dans la boîte 4 à partir des trois arbres d'entrée 5, 6, 11, décalés axialement les uns par rapport aux autres. Ils sont reliés à chacune des sources motrices 1, 2, 3, et à un arbre de sortie commun 7 en direction des roues du véhicule.

La boîte de vitesses 4 dispose ainsi de trois entrées de mouvement. Elle présente un arbre d'entrée 5 pour la machine électrique principale 1 (ME1), un arbre d'entrée 6, pour la machine électrique secondaire 2 (ME2), et un arbre d'entrée 11 pour le moteur thermique 3. La boîte 4 comporte en plus un arbre intermédiaire 12 qui renvoie le mouvement de l'arbre d'entrée 11 du moteur thermique 3 sur l'arbre d'entrée 6 de la machine électrique secondaire 2. Enfin, le mouvement de la première machine électrique 1 est transmis par un pignon de renvoi 13, de son arbre d'entrée, sur l'arbre secondaire 7, assurant la sortie du mouvement vers les roues du véhicule.

L'« *arbre d'entrée* thermique » 11, porte un seul pignon fixe 11a, qui engrène en permanence avec un pignon
18 de l'arbre intermédiaire 12. De gauche à droite, *l'« arbre d'entrée* électrique » 6 porte un premier pignon fou 14 engrenant avec un pignon fixe 23 de l'arbre secondaire 7, en imposant un rapport R3 au mouvement transmis. Le pignon fou 14 est associé à un coupleur 16

(C3), qui le lie en rotation sur son arbre, lorsqu'il est actionné pour assurer descente du couple de la machine secondaire ME2 sur l'arbre secondaire 7. Un deuxième pignon fou 17, associé au moteur thermique 3, engrène en permanence avec un pignon 18 de l'arbre intermédiaire 12.

Un autre coupleur 19 (C1) permet de lier le pignon fou 17 sur son arbre 6, pour assurer le transfert du couple du moteur thermique sur celui-ci. Un pignon double 21, 22, monté sur des aiguilles, tourne librement sur l'arbre d'entrée électrique 6. Le couple de la machine électrique principale ME1 peut être transmis directement à l'arbre de sortie commun 7 par le pignon de renvoi 13 sur un pignon fou 27 de deuxième rapport R2, tournant sur l'arbre 7, ou par l'intermédiaire du pignon double 21, 22 sur le pignon fou 26 de premier rapport (R1) qui tourne également autour de l'arbre 7.

Ce dernier porte un premier pignon fixe 23, en prise avec le pignon fou 14 de l'arbre 6, un pignon d'attaque 24 sur la couronne de différentiel 8, et les deux pignons fous 26, 27 des rapports électriques R1 et R2. Un dernier coupleur 28 (C2) permet de lier l'un ou l'autre des pignons fous 26, 27, sur l'arbre secondaire 7 pour imposer le rapport R1 ou R2 au mouvement de la machine principale ME1. Le coupleur C2 permet d'établir deux rapports de transmission différents entre l'un des arbres d'entrée et l'arbre de sortie commun. Enfin, le pignon de renvoi 13 de l'arbre d'entrée 5 engrène en permanence avec le pignon fou de rapport R2, 27.

En résumé, la boîte 4 comporte porte trois coupleurs, de préférence à baladeur, C1, C2, et C3 :
- le premier coupleur C1 permet d'établir la transmission du couple du moteur thermique sur l'arbre d'entrée 6 de la machine électrique secondaire ME2, ou d'établir la transmission entre l'arbre 6 et le pignon double 21, 22 : la machine ME2 est alors couplée à la machine ME2, et l'on dispose des rapports R1 et R2.
- le deuxième coupleur C2 permet d'établir la transmission du couple de la machine électrique principale ME1 vers l'arbre de sortie commun 7, sur deux premiers rapports de transmission R1, R2,
- le troisième coupleur C3 16 permet d'établir la transmission du couple de la machine électrique secondaire ME2 vers l'arbre de sortie commun 7, sur un troisième rapport de transmission R3.

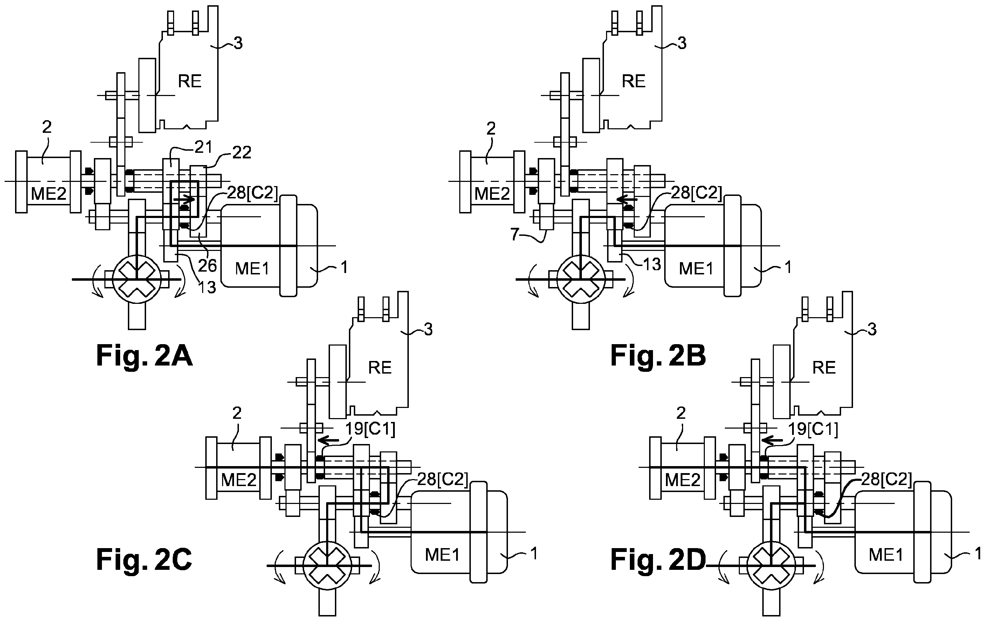

Les modes de fonctionnement illustrés par les figures 2A à 2D, sont purement électriques. La fermeture du deuxième coupleur C2 assure le déplacement du véhicule en mode électrique avec la machine électrique principale 1, sur l'un ou l'autre des deux rapports électriques R1, R2.

Sur la figure 2A, seule la machine électrique principale ME1 fournit de l'énergie. Celle-ci remonte sur le pignon double 21, 22 de l'arbre d'entrée 6 par le pignon de renvoi 13 et le pignon secondaire, 27 qui tourne fou sur son arbre. Le baladeur du coupleur 28 (C2) est déplacé vers la droite, pour lier le pignon secondaire 26 de rapport R1 sur son arbre 7. Les deux autres coupleurs C1 et C3 sont au repos. Le GMP est dans un mode de fonctionnement purement électrique, avec la machine électrique principale ME1 seule, sur le rapport R1 (premier rapport).

Sur la figure 2B, le baladeur de C2 a changé de position. Il est déporté vers la gauche. Il lie en rotation le pignon secondaire 27 de deuxième rapport électrique R2 sur son arbre 7. Le couple de la machine principale ME1 est transmis aux roues sur le deuxième rapport électrique R2.

La fermeture simultanée du deuxième coupleur C2 et du troisième coupleur C3 assure le déplacement du véhicule en mode électrique avec la machine électrique principale

ME1 sur l'un ou l'autre de deux rapports électriques R1, R2, avec l'appoint de la machine électrique secondaire ME2 au travers du troisième rapport R3. Sur la figure 2C, le coupleur C2 est dans la même position que sur la figure 4A, mais le coupleur permet à la machine électrique secondaire ME2 d'ajouter son couple à la première ME1, en rapport R1.

Sur la figure 2D, le coupleur C2 est dans la même position que sur la figure 2B, pour le rapport R2 de la machine principale ME1, avec l'appoint de la machine secondaire ME2.

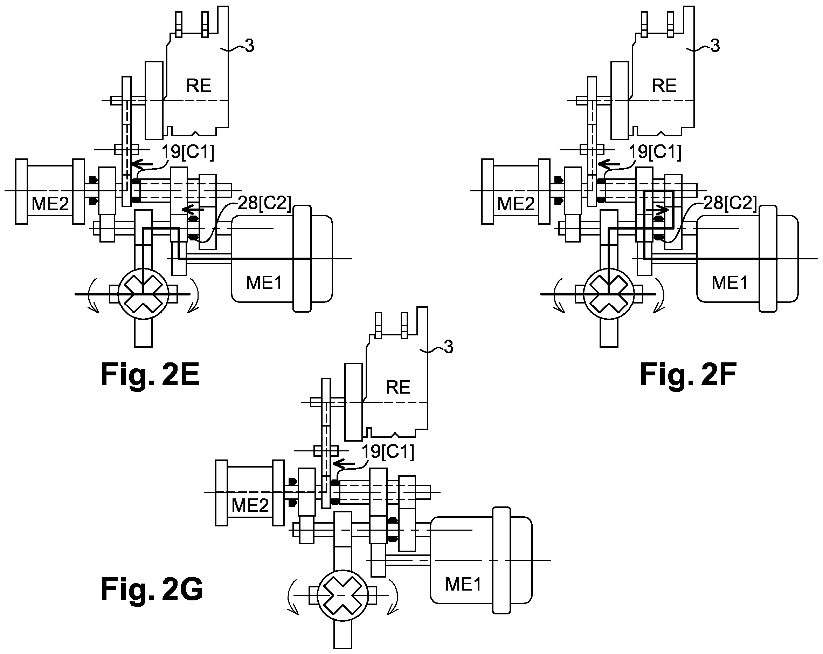

Les trois figures suivantes illustrent des modes dits de prolongation d'autonomie (dits « *range extender* »), où le moteur thermique 3 est utilisé pour faire tourner la machine électrique secondaire ME2 comme générateur pour recharger les batteries du véhicule ou alimenter directement la machine ME1. Le premier coupleur C1 assure la liaison entre la machine électrique secondaire ME2 et le moteur thermique 3 (arbre d'entrée 11). Son déplacement côté droit permet de faire tourner la machine électrique secondaire ME2 en roulage sur l'un des deux rapports électriques R1, R2, ou à l'arrêt. Sur la figure 2E, le coupleur 28 (C2) est déplacé vers la gauche. Le véhicule roule en mode électrique avec la première machine El sur le deuxième rapport électrique R2. Sur la figure 2F, le baladeur du coupleur 28 est déplacé vers la droite. Le véhicule roule en mode électrique sur le premier rapport R1. Sur la figure 2G, le baladeur du coupleur 28 est au centre. Le GMP charge les batteries du véhicule à l'arrêt.

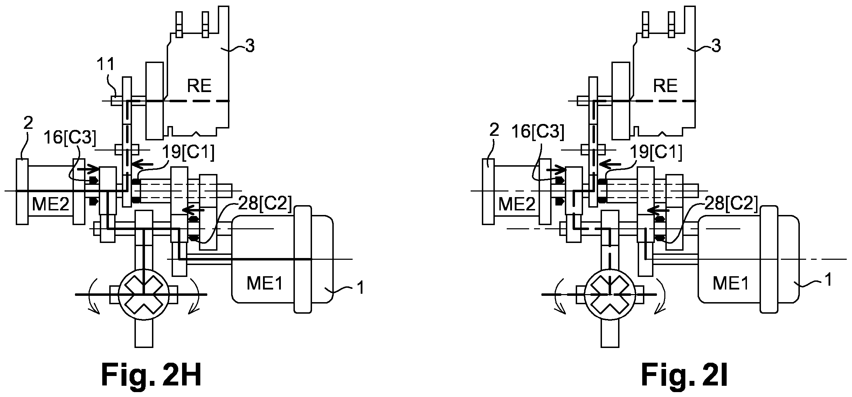

La fermeture simultanée des trois coupleurs C1, C2, C3 assure le déplacement du véhicule en mode hybride avec la puissance cumulée des deux machines électriques ME1, ME2 et du moteur thermique 3. La figure 2H illustre ce mode de fonctionnement hybride sportif, dit « *boost* », avec cumul des trois sources d'énergie. La machine électrique principale ME1 transmet son couple sur le rapport R1 (baladeur du coupleur C2 à gauche). Le coupleur C1 est à gauche pour coupler l'arbre d'entrée thermique 11 avec l'arbre d'entrée 6 de la machine électrique ME2. Le baladeur du coupleur C3 (16) aussi à gauche. Dans un mode de fonctionnement similaire non représenté, avec le baladeur du coupleur C2 à droite, les puissances des trois sources d'énergie peuvent se cumuler avec la machine ME1 sur le rapport R2.

Sans l'appoint de la machine ME2, on a un autre mode de fonctionnement thermique ou hybride, illustré par la figure 2I. Il est particulièrement adapté aux déplacements à vitesse stabilisée, avec le moteur thermique en prise directe sur le rapport R3. Sans la machine principale ME1, on est en mode thermique. Avec son apport de puissance sur le rapport R2, on est en mode hybride. Finalement, la fermeture simultanée du premier et du troisième coupleur C1, C3, permet de déplacer le véhicule en mode thermique sur le troisième rapport R3 avec ou sans la machine électrique principale ME1.

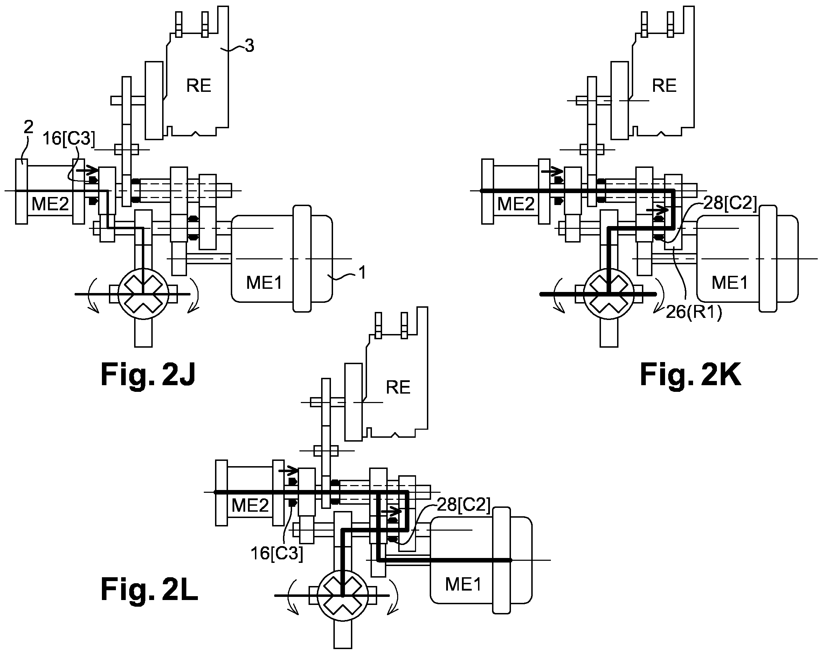

Dans le mode de fonctionnement illustré par la figure 2J, on ferme uniquement le troisième coupleur C3. La seule source d'énergie sollicitée pour déplacer le véhicule est la deuxième machine ME2 en rapport R3. Le véhicule peut ainsi se déplacer en mode électrique avec seulement la machine électrique secondaire ME2, dans un mode de roulage électrique « économique ».

Sur la figure 2K, la boîte de vitesses 4 est en marche arrière. La marche arrière est assurée par la machine électrique secondaire ME2 seule, en fermant le troisième coupleur C3, qui la couple à la boîte de vitesses 4. Le sens de rotation de la machine électrique ME2 est inversé. Le coupleur C2 assure la descente du mouvement sur le rapport R1, lorsqu'il est placé à droite comme sur la figure 2K. En le plaçant à gauche, la descente serait sur le rapport R2.

Enfin, sur la figure 2L, les deux machines électriques ME1 et ME2 peuvent se cumuler en marche arrière en fermant les deux coupleurs C2 et C3. Ce mode de fonctionnement convient notamment pour effectuer des marche-arrière en forte pente.

Les avantages du GMP proposé et de sa boîte de vitesses, ainsi que de son fonctionnement, sont nombreux. Parmi ceux-ci, il faut souligner la très grande flexibilité d'utilisation, qui permet de proposer un véhicule électrique puissant, avec une autonomie importante.

L'utilisation simultanée ou découplée des trois sources motrices, offre en effet de nombreuses possibilités de fonctionnement. On peut notamment :
- cumuler la puissance des trois moteurs et proposer un véhicule sportif et puissant,
- rouler en mode électrique, standard ou économique,
- proposer un mode sportif « *boost* » avec une démultiplication différente entre les deux moteurs électriques,
- faire de la récupération d'énergie cinétique,
- recharger les batteries en roulant en mode « range extender », et
- rouler en mode refuge avec uniquement le moteur thermique.

## Revendications

1. Groupe motopropulseur hybride de véhicule, composé d'une boîte de vitesses (4) selon l'une des revendications 8 à 11 et de trois sources motrices (1, 2, 3) reliées par des arbres d'entrée décalés axialement (11, 12, 6) dans la boîte de vitesses (4) **caractérisé en ce que** le couple d'une première machine électrique (1) est renvoyé sur l'arbre de sortie commun (7) par l'intermédiaire d'un pignon double (21, 22), tournant librement sur l'arbre d'entrée (6) d'une deuxième machine électrique (2).

2. Groupe motopropulseur selon la revendication 1, **caractérisé en ce que** les trois sources motrices (1, 2, 3) sont respectivement une machine électrique principale (1), une machine électrique secondaire (2) et un moteur thermique (3).

3. Groupe motopropulseur selon la revendication 2, **caractérisé en ce que** la boîte de vitesses (4) comporte un coupleur (19) permettant d'établir la transmission du couple du moteur thermique (3) sur l'arbre d'entrée (6) de la machine électrique secondaire (2).

4. Groupe motopropulseur selon la revendication 2 ou 3, **caractérisé en ce que** la boîte de vitesses comporte un coupleur (28) permettant d'établir la transmission du couple de la machine électrique principale (1) vers l'arbre de sortie commun (7), sur deux rapports de transmission (R1, R2).

5. Groupe motopropulseur selon la revendication 2, 3 ou 4, **caractérisé en ce que** la boîte de vitesses comporte un coupleur (16) permettant d'établir la transmission du couple de la machine électrique secondaire(2) vers l'arbre de sortie commun (7) sur un troisième rapport de transmission (R3).

6. Groupe motopropulseur selon l'une des revendications 2 à 5, **caractérisé en ce que** la boîte de vitesses (4) comporte un arbre intermédiaire (12) de renvoi du mouvement de l'arbre d'entrée (11) du moteur thermique (3) sur l'arbre d'entrée (6) de la machine électrique secondaire (2).

7. Groupe motopropulseur selon la revendication 5 ou 6, **caractérisé en ce que** le mouvement de la première machine électrique (1) est transmis directement à l'arbre de sortie commun (7) par un pignon de renvoi (13) sur un pignon fou (27) du deuxième rapport (R2) tournant autour de l'arbre de sortie (7) de la boîte, ou par l'intermédiaire du pignon double (21, 22) sur le pignon fou (26) du premier rapport (R1).

8. Boîte de vitesses (4) à arbres parallèles et à engrenages pour véhicule comportant trois arbres d'entrée (5, 6, 11) décalés axialement (11, 12, 6) reliés à un arbre de sortie commun (7) en direction des roues du véhicule et plusieurs coupleurs (19, 28, 16) permettant d'établir sélectivement le transfert du couple fourni par les arbres d'entrée, destinés à être chacun connecté à une source motrice distincte, l'un des arbres d'entrée (11) adapté à être connecté à un moteur thermique, sur l'arbre de sortie commun (7), l'un des coupleurs (28) permettant d'établir deux rapports de transmission différents entre l'un des arbres d'entrée (5) adapté à être connecté à une première machine électrique (1) et l'arbre de sortie commun, **caractérisée en ce que** la boite est agencée de sorte à ce que le couple fourni par l'arbre d'entrée apte à être connecté à la première machine électrique (1) est renvoyé sur l'arbre de sortie commun (7) par l'intermédiaire d'un pignon double (21, 22), tournant librement sur l'arbre d'entrée (6) adapté à être connecté à une deuxième machine électrique (2).

9. Boîte de vitesses (4), selon la revendication 8, **caractérisée en ce qu'**elle comporte un premier coupleur (19) permettant d'établir la transmission du couple fourni par l'arbre d'entrée apte à être connecté au moteur thermique sur l'arbre d'entrée (6) apte à être connecté à la deuxième machine électrique (2), un deuxième coupleur (28) permettant d'établir la transmission du couple fourni par l'arbre d'entrée apte à être connecté à la première machine électrique (1) vers l'arbre de sortie commun (7), sur deux rapports de transmission (R1, R2), et un troisième coupleur (16) permettant d'établir la transmission du couple de fourni par l'arbre d'entrée apte à être connecté à la deuxième machine électrique (2) vers l'arbre de sortie commun (7) sur un troisième rapport de transmission (R3).

10. Boîte de vitesses selon la revendication 8 ou 9, **caractérisée en ce qu'**elle comporte un arbre intermédiaire (12) de renvoi du mouvement de l'arbre d'entrée (11) apte à être connecté au moteur thermique (3) sur l'arbre d'entrée (6) apte à être connecté à la deuxième machine électrique (2).

11. Boîte de vitesses selon la revendication 9, 10 ou 11, **caractérisée en ce que** le mouvement de la première machine électrique (1) est transmis directement à l'arbre de sortie commun (7) par un pignon de renvoi (13) sur un pignon (28) fou (27) de deuxième rapport (R2) tournant sur l'arbre de sortie (7) de la boîte, ou par l'intermédiaire du pignon double (21, 22) sur le pignon fou (26) de premier rapport (R1).

12. Procédé de commande d'un groupe motopropulseur selon l'une des revendications 5 à 7, **caractérisé en ce que** la fermeture simultanée de deux coupleurs (28, 16) assure le déplacement du véhicule en mode électrique avec la machine électrique principale (1) sur l'un ou l'autre de deux rapports électriques (R1, R2), avec l'appoint de la machine électrique secondaire.

13. Procédé de commande d'un groupe motopropulseur selon la revendication précédente, **caractérisé en ce que** la fermeture d'un coupleur (19) permet de faire tourner la machine électrique secondaire en générateur (2) avec le moteur thermique (3), sur l'un des deux rapports électriques (R1, R2), ou à l'arrêt.

14. Procédé de commande d'un groupe motopropulseur selon la revendication 12, **caractérisé en ce que** la fermeture simultanée des trois coupleurs (19, 28, 16) assure le déplacement du véhicule en mode hybride avec la puissance cumulée des deux machines électriques (1, 2) et du moteur thermique (3).

15. Procédé de commande d'un groupe motopropulseur selon la revendication 12, **caractérisé en ce que** la fermeture simultanée de deux coupleurs (19, 16) permet de déplacer le véhicule en mode thermique sur le troisième rapport (R3) avec ou sans l'appoint de la machins électrique principale (1).

16. Procédé de commande selon l'une des revendications 13 à 15, **caractérisé en ce que** la marche arrière est assurée par la machine électrique secondaire seule (2) en fermant un coupleur (16).

17. Procédé de commande selon la revendication 16, **caractérisé en ce que** les puissances des deux machines électriques se cumulent en marche arrière, en fermant simultanément deux coupleurs (19, 28).

## Patentansprüche

1. Antriebsstrang eines Hybridfahrzeugs, bestehend aus einem Getriebe (4) nach einem der Ansprüche 8 bis 11 und drei Antriebsquellen (1, 2, 3), die durch axial versetzte Antriebswellen (11, 12, 6) im Getriebe (4) verbunden sind,
**dadurch gekennzeichnet, dass** das Drehmoment eines ersten Elektromotors (1) über ein Doppelritzel (21, 22), das frei auf der Antriebswelle (6) eines zweiten Elektromotors (2) rotiert, auf die gemeinsame Abtriebswelle (7) übertragen wird.

2. Antriebsstrang nach Anspruch 1, **dadurch gekennzeichnet, dass** die drei Antriebsquellen (1, 2, 3) jeweils ein Hauptelektromotor (1), ein Sekundärelektromotor (2) und ein Verbrennungsmotor (3) sind.

3. Antriebsstrang nach Anspruch 2, **dadurch gekennzeichnet, dass** das Getriebe (4) eine Kupplung (19) umfasst, die das Herstellen der Drehmomentübertragung von dem Verbrennungsmotor (3) auf die Antriebswelle (6) des Sekundärelektromotors (2) ermöglicht.

4. Antriebsstrang nach Anspruch 2 oder 3, **dadurch gekennzeichnet, dass** das Getriebe eine Kupplung (28) umfasst, die das Herstellen der Drehmomentübertragung von dem Hauptelektromotor (1) auf die gemeinsame Abtriebswelle (7) in zwei Übersetzungsverhältnissen (R1, R2) ermöglicht.

5. Antriebsstrang nach Anspruch 2, 3 oder 4, **dadurch gekennzeichnet, dass** das Getriebe eine Kupplung (16) umfasst, die das Herstellen der Drehmomentübertragung von dem Sekundärelektromotor (2) auf die gemeinsame Abtriebswelle (7) in einem dritten Übersetzungsverhältnis (R3) ermöglicht.

6. Antriebsstrang nach einem der Ansprüche 2 bis 5,
**dadurch gekennzeichnet, dass** das Getriebe (4) eine Zwischenwelle (12) zum Übertragen der Bewegung der Antriebswelle (11) des Verbrennungsmotors (3) auf die Antriebswelle (6) des Sekundärelektromotors (2) umfasst.

7. Antriebsstrang nach Anspruch 5 oder 6, **dadurch gekennzeichnet, dass** die Bewegung des ersten Elektromotors (1) durch ein Umlenkritzel (13) über ein um die Abtriebswelle (7) des Getriebes rotierendes Losrad (27) des zweiten Ganges (R2) oder über das Doppelritzel (21, 22) auf das Losrad (26) des ersten Ganges (R1) direkt auf die gemeinsame Abtriebswelle (7) übertragen wird.

8. Parallelwellen- und Zahnradgetriebe (4) für ein Fahrzeug umfassend drei Antriebswellen (5, 6, 11), die axial versetzt (11, 12, 6) und mit einer gemeinsamen Abtriebswelle (7) in Richtung der Räder des Fahrzeugs verbunden sind, und mehreren Kupplungen (19, 28, 16), die das selektive Herstellen der Übertragung des von den Antriebswellen bereitgestellten Drehmoments ermöglichen, die jeweils zum Verbinden mit einer separaten Antriebsquelle vorgesehen sind, wobei eine der Antriebswellen (11) zum Verbinden mit einem Verbrennungsmotor geeignet ist, wobei auf der gemeinsamen Abtriebswelle (7) eine der Kupplungen (28) das Herstellen von zwei unterschiedlichen Übersetzungsverhältnissen zwischen einer der Antriebswellen (5), die zum Verbinden mit einem ersten Elektromotor (1) geeignet ist, und der gemeinsamen Abtriebswelle ermöglicht, **dadurch gekennzeichnet, dass** das Getriebe so angeordnet ist, dass das von der Antriebswelle bereitgestellte Drehmoment, das zum Verbinden mit dem ersten Elektromotor (1) geeignet ist, über ein Doppelritzel (21, 22), das frei auf der Antriebswelle (6) rotiert, die zum Verbinden mit einem zweiten Elektromotor (2) geeignet ist, auf die gemeinsame Abtriebswelle (7) übertragen wird.

9. Getriebe (4) nach Anspruch 8, **dadurch gekennzeichnet, dass** es eine erste Kupplung (19) umfasst, die das Herstellen der Übertragung des Drehmoments, das von der Antriebswelle bereitgestellt wird, die zum Verbinden mit dem Verbrennungsmotor geeignet ist, auf die Antriebswelle (6) ermöglicht, die zum Verbinden mit dem zweiten Elektromotor (2) geeignet ist, wobei eine zweite Kupplung (28) das Herstellen der Übertragung des Drehmoments, das von der Antriebswelle bereitgestellt wird, die zum Verbinden mit dem ersten Elektromotor (1) geeignet ist, auf die gemeinsame Abtriebswelle (7) in zwei Übersetzungsverhältnissen (R1, R2) ermöglicht, und wobei eine dritte Kupplung (16) das Herstellen der Übertragung des Drehmoments, das von der Antriebswelle bereitgestellt wird, die zum Verbinden mit dem zweiten Elektromotor (2) geeignet ist, auf die gemeinsame Abtriebswelle (7) in einem dritten Übersetzungsverhältnis (R3) ermöglicht.

10. Getriebe nach Anspruch 8 oder 9, **dadurch gekennzeichnet, dass** es eine Zwischenwelle (12) zum Übertragen der Bewegung der Antriebswelle (11), die zum Verbinden mit dem Verbrennungsmotor (3) geeignet ist, auf die Antriebswelle (6), die zum Verbinden mit dem zweiten Elektromotor (2) geeignet ist, umfasst.

11. Getriebe nach Anspruch 9, 10 oder 11, **dadurch gekennzeichnet, dass** die Bewegung des ersten Elektromotors (1) direkt auf die gemeinsame Abtriebswelle (7) durch ein Umlenkritzel (13) auf ein auf der Abtriebswelle (7) des Getriebes rotierendes Losrad (28) (27) des zweiten Ganges (R2) oder über das Doppelritzel (21, 22) auf das Losrad (26) des ersten Ganges (R1) übertragen wird.

12. Verfahren zum Steuern eines Antriebsstrangs nach einem der Ansprüche 5 bis 7, **dadurch gekennzeichnet, dass** das gleichzeitige Schließen zweier Kupplungen (28, 16) das Bewegen des Fahrzeugs im Elektromodus mit dem Hauptelektromotor (1) in dem einen oder dem anderen von zwei elektrischen Gängen (R1, R2) mit Unterstützung des Sekundärelektromotors gewährleistet.

13. Verfahren zum Steuern eines Antriebsstrangs nach dem vorstehenden Anspruch, **dadurch gekennzeichnet, dass** das Schließen einer Kupplung (19) ermöglicht, den Sekundärelektromotor als Generator (2) mit dem Verbrennungsmotor (3) in einem der beiden elektrischen Gänge (R1, R2) oder im Stillstand laufen zu lassen.

14. Verfahren zum Steuern eines Antriebsstrangs nach Anspruch 12,
**dadurch gekennzeichnet, dass** das gleichzeitige Schließen der drei Kupplungen (19, 28, 16) das Bewegen des Fahrzeugs im Hybridmodus mit der kumulierten Leistung der beiden Elektromotoren (1, 2) und des Verbrennungsmotors (3) gewährleistet.

15. Verfahren zum Steuern eines Antriebsstrangs nach Anspruch 12,
**dadurch gekennzeichnet, dass** das gleichzeitige Schließen zweier Kupplungen (19, 16) das Bewegen des Fahrzeugs im Verbrennungsmodus im dritten Gang (R3) mit oder ohne Unterstützung des Hauptelektromotors (1) ermöglicht.

16. Verfahren zum Steuern nach einem der Ansprüche 13 bis 15,
**dadurch gekennzeichnet, dass** der Rückwärtsgang allein von dem Sekundärelektromotor (2) durch Schließen einer Kupplung (16) gewährleistet wird.

17. Verfahren zum Steuern nach Anspruch 16, **dadurch gekennzeichnet, dass** die Leistungen der beiden Elektromotoren durch gleichzeitiges Schließen zweier Kupplungen (19, 28) im Rückwärtsgang kumuliert werden.

## Claims

1. Vehicle hybrid powertrain, consisting of a gearbox (4) according to one of claims 8 to 11 and three power sources (1, 2, 3) which are connected by axially offset input shafts (11, 12, 6) in the gearbox (4), **characterized in that** the torque of a first electric machine (1) is returned to the common output shaft (7) by means of a double pinion (21, 22), rotating freely on the input shaft (6) of a second electric machine (2).

2. Powertrain according to claim 1, **characterized in that** the three power sources (1, 2, 3) are a main electric machine (1), a secondary electric machine (2) and a heat engine (3), respectively.

3. Powertrain according to claim 2, **characterized in that** the gearbox (4) comprises a coupling (19) for establishing torque transmission from the heat engine (3) to the input shaft (6) of the secondary electric machine (2).

4. Powertrain according to claim 2 or 3, **characterized in that** the gearbox comprises a coupling (28) for establishing torque transmission from the main electric machine (1) to the common output shaft (7) at two transmission ratios (R1, R2).

5. Powertrain according to claim 2, 3 or 4, **characterized in that** the gearbox comprises a coupling (16) for establishing torque transmission from the secondary electric machine (2) to the common output shaft (7) at a third transmission ratio (R3).

6. Powertrain according to one of claims 2 to 5, **characterized in that** the gearbox (4) comprises an intermediate shaft (12) for returning the motion of the input shaft (11) of the heat engine (3) to the input shaft (6) of the secondary electric machine (2).

7. Powertrain according to claim 5 or 6, **characterized in that** the motion of the first electric machine (1) is transmitted directly to the common output shaft (7) via an intermediate pinion (13) on an idler gear (27) of the second ratio (R2) rotating around the gearbox output shaft (7), or by means of the double pinion (21, 22) on the idler gear (26) of the first ratio (R1).

8. Parallel shaft geared vehicle gearbox (4) comprising three axially offset (11, 12, 6) input shafts (5, 6, 11) which are connected to a common output shaft (7) in the direction of the vehicle wheels and a plurality of couplings (19, 28, 16) for selectively transferring the torque supplied by the input shafts, each intended to be connected to a separate power source, one of the input shafts (11 ) being suitable for connecting to a heat engine, to the common output shaft (7), one of the couplings (28) enabling two different transmission ratios to be established between one of the input shafts (5) for connecting to a first electric machine (1) and the common output shaft, **characterized in that** the gearbox is arranged so that the torque supplied by the input shaft for connecting to the first electric machine (1) is returned to the common output shaft (7) by means of a double pinion (21, 22), freely rotating on the input shaft (6) for connecting to a second electric machine (2).

9. Gearbox (4), according to claim 8, **characterized in that** it comprises a first coupling (19) for establishing the transmission of torque, supplied by the input shaft for connecting to the heat engine, to the input shaft (6) for connecting to the second electric machine (2), a second coupling (28) for establishing the transmission of torque, supplied by the input shaft for connecting to the first electric machine (1), to the common output shaft (7), at two transmission ratios (R1, R2) and a third coupling (16) for establishing the transmission of torque, supplied by the input shaft for connecting to the second electric machine (2), to the common output shaft (7) at a third transmission ratio (R3).

10. Gearbox according to claim 8 or 9, **characterized in that** it comprises an intermediate shaft (12) for returning the motion of the input shaft (11) for connecting to the heat engine (3) to the input shaft (6) for connecting to the second electric machine (2).

11. Gearbox according to claim 9, 10 or 11, **characterized in that** the motion of the first electric machine (1) is transmitted directly to the common output shaft (7) via an intermediate pinion (13) on an idler (27) gear (28) of second ratio (R2) rotating on the output shaft (7) of the gearbox, or by means of the double pinion (21, 22) on the idler gear (26) of first ratio (R1).

12. Method for controlling a powertrain according to one of claims 5 to 7, **characterized in that** closing two couplings (28, 16) simultaneously ensures that the vehicle travels in electric mode with the main electric machine (1) at one or other of two electric ratios (R1, R2), backed up by the secondary electric machine.

13. Method for controlling a powertrain according to the preceding claim, **characterized in that** closing one coupling (19) enables the secondary electric machine (2) to be run in generator mode with the heat engine (3), at one of two electric ratios (R1, R2), or when stationary.

14. Method for controlling a powertrain according to claim 12,
**characterized in that** closing the three couplings (19, 28, 16) simultaneously ensures that the vehicle travels in hybrid mode with the combined power of the two electric machines (1, 2) and the heat engine (3).

15. Method for controlling a powertrain according to claim 12,
**characterized in that** closing two couplings (19, 16) simultaneously enables the vehicle to travel in engine mode at the third ratio (R3), with or without back-up from the main electric machine (1).

16. Control method according to one of claims 13 to 15, **characterized in that** the reverse gear is provided by the secondary electric machine (2) alone by closing one coupling (16).

17. Control method according to claim 16, **characterized in that** the power of the two electric machines is combined in reverse, by simultaneously closing two couplers (19, 28).
